# EUROPEAN PATENT SPECIFICATION

(11) **EP 1 473 621 B1**
(45) Date of publication and mention of the grant of the patent: **09.08.2006**
(21) Application number: 03009504.6
(22) Date of filing: 28.04.2003
(51) Int. Cl.: G06F 3/033, H04M 1/247

(54) **Method and device for scrolling speed control**
Verfahren und Vorrichtung zum Regeln der Scrollgeschwindigkeit
Procédé et dispositif pour contrôler la vitesse de défilement

(43) Date of publication of application: 03.11.2004
(73) Proprietor: Sony Ericsson Mobile Communications AB, 221 88 Lund (SE)
(72) Inventor: Foxenland, Eral, 211 56 Malmö (SE)
(74) Representative: Dahnér, Christer

(56) References cited:
- EP-A- 0 474 234
- WO-A-01/28197
- WO-A-01/56256
- WO-A-02/25903
- JP-A- 5 061 631
- US-A1- 2002 027 565
- US-B1- 6 496 180

## Description

### TECHNICAL FIELD OF THE INVENTION

The present invention relates to the field of scrolling in sets of items, for Instance lists provided in portable electronic devices, and more particularly to a method and a device for varying the scrolling speed for a set of items.

### DESCRIPTION OF RELATED ART

The cellular phones of today have more and more different functions and applications in them. In order to sort between different functions and data relating to functions, the phones are normally provided with a menu system, in which a user can scroll in order to find data or functions that are grouped together. An example of such a group or set is for instance a telephone book, which lists a number of contacts and their corresponding phone numbers.

In the phones of today, there does not to the best of our knowledge exist the possibility to scroll lists with different speeds, they all use the same scrolling speed. This is a disadvantage, because different users might have different needs for scrolling fast, either because of personal differences or because of differences related to the items scrolled. One user might for instance need a faster scrolling speed than another user. The one and same user might also have a need for different scrolling speeds because for instance the number of items scrolled can be many, which might give rise to the need of a high scrolling speed, whereas in some other instances a slower scrolling speed might be needed because the items scrolled are few. Another reason for varying scrolling speed is that a user might be alert with quick reactions at one point in time and tired with slow reactions at another point in time, which gives rise to the need to provide different scrolling speeds also for a single user. In short there is a need to provide personallsed scrolling speeds.

In the art of computers it is known to provide varied scrolling speeds automatically. Here the scrolling speed is increased automatically when a user is for instance scrolling a long text document. The user does however not have full control of this scrolling, and will in many cases feel that the scrolling goes too slowly in the beginning and too fast in the end to be able to control the scrolling properly.

There is thus a need for providing varied scrolling speeds that can be fully controlled by a user in a simple manner.

International patent application WO-A-0128197 discloses a portable electronic device wherein the scrolling and scrolling speed control is provided by one user input unit in the form of a navigation key. Scrolling in different directions is performed by actuating the navigation key upwards or downwards, while pressing of the same key Increases scrolling and releasing the pressure decreases scrolling speed.

American patent US-B1-6496180 discloses a mouse for a computer having one user input unit in the form of a slider arranged to slide backwards and forwards in order to provide scrolling backwards and forwards as well as differentiated scrolling speeds.

### SUMMARY OF THE INVENTION

The present invention is thus directed towards providing varied scrolling speeds that can be fully controlled by a user in a simple manner.

This is achieved by detecting a scrolling action selection and a scrolling speed variation selection and changing the scrolling speed in dependence of these selections.

One object of the present invention is to provide a method enabling varied scrolling speeds that can be fully controlled by a user in a simple manner.

According to a first aspect of the present invention, this object is achieved by a method of varying the scrolling speed provided for a set of items comprising the steps of:
providing a set of items of information that can be scrolled by a user,
detecting a scrolling action selection from a user,
detecting a scrolling speed variation selection from said user, and
changing the scrolling speed in dependence of the selections made by the user.

A second aspect of the present invention is directed to a method including the features of the first aspect, wherein the step of changing is made based on simultaneous detection of scrolling action and scrolling speed variation.

A third aspect of the present invention is directed towards a method including the features of the first aspect, wherein the scrolling speed is varied with a certain step size and the scrolling speed is varied with said step size each time a scrolling speed variation selection is detected during detection of a scrolling action selection.

A fourth aspect of the present invention is directed towards a method including the features of the first aspect, wherein the scrolling speed is varied linearly when a scrolling speed variation selection is detected during detection of a scrolling action selection.

A fifth aspect of the present invention is directed towards a method including the features of the first aspect, wherein the scrolling speed variation is either an increase or a decrease of the scrolling speed.

A sixth aspect of the present invention is directed towards a method including the features of the fifth aspect, wherein a first user input unit allows actuation for a first direction and for a second opposite direction, each allowing scrolling in said direction, and a second user input unit allows actuation for the first and the second opposite directions, wherein the detection of a scrolling action selection by an actuation of the first input unit for one direction together with the detection of a scrolling speed variation selection by an actuation of the second user input unit for the same direction provides a scrolling speed increase and the detection of a scrolling action selection by an actuation of the first input unit for one direction together with the detection of a scrolling speed variation selection by an actuation of the second user input unit for the opposite direction provides a scrolling speed decrease.

A seventh aspect of the present invention is directed towards a method including the features of the first aspect, further comprising the step of saving a scrolling speed setting based on the changed scrolling speed.

An eighth aspect of the present invention is directed towards a method including the features of the seventh aspect, wherein the step of saving is performed automatically.

A ninth aspect of the present invention is directed towards a method including the features of the seventh aspect, wherein the step of saving is performed after detecting a selection of saving scrolling speed from the user.

A tenth aspect of the present invention is directed towards a method including the features of the seventh aspect, wherein the step of saving is performed for said set of items.

An eleventh aspect of the present invention is directed towards a method including the features of the tenth aspect, wherein the step of saving is also performed for at least one other set of items.

Another object of the present invention is to provide a device, which provides varied scrolling speeds that can be fully controlled by a user in a simple manner and which gives the user a feeling of full control of the scrolling.

According to a twelfth aspect of the present invention, this object is achieved by a device for varying the scrolling speed provided for a set of items comprising:
an information presentation unit providing a set of items of information that can be scrolled by a user,
a first user input unit, for allowing a scrolling action selection by the user,
a second user input unit for allowing a scrolling speed variation selection by the user, and
a control unit arranged to:
   provide said set of items of information on the information presentation unit,
   detect a scrolling action selection by a user via said first user input unit, detect a scrolling speed variation selection via said second user input unit, and
   change the scrolling speed in dependence of the selections made by the user.

A thirteenth aspect of the present invention is directed towards a device including the features of the twelfth aspect, wherein the control unit is arranged to change the scrolling speed based on simultaneous detection of scrolling action and scrolling speed variation.

A fourteenth aspect of the present invention is directed towards a device including the features of the twelfth aspect, wherein the control unit is further arranged to vary the scrolling speed with a certain step size and the scrolling speed is varied with said step size each time a scrolling speed variation selection is detected during detection of a scrolling action selection.

A fifteenth aspect of the present invention is directed towards a device including the features of the twelfth, wherein the control unit is further arranged to vary the scrolling speed linearly when a scrolling speed variation selection is detected during a detection of a scrolling action selection.

A sixteenth aspect of the present invention is directed towards a device including the features of the twelfth aspect, wherein the scrolling speed variation is either an increase or a decrease of the scrolling speed.

A seventeenth aspect of the present invention is directed towards a device including the features of the sixteenth aspect, wherein the first user input unit allows actuation for a first direction and for a second opposite direction, each allowing scrolling in said direction, and the second user input unit allows actuation for the first and the second opposite direction, wherein the control unit in detecting a scrolling action selection by actuation of the first input unit for one direction together with detecting of a scrolling speed variation selection by an actuation of the second user input unit for the same direction provides a scrolling speed increase and in detecting of a scrolling action selection by detection of an actuation of the first input unit for one direction together with detecting of a scrolling speed variation selection by an actuation of the second user input unit for the opposite direction provides a scrolling speed decrease.

An eighteenth aspect of the present invention is directed towards a device including the features of the twelfth aspect, further comprising a scroll speed storage and wherein the control unit is further arranged to save a scrolling speed setting in the scroll speed storage based on the changed scrolling speed.

A nineteenth aspect of the present invention is directed towards a device including the features of the eighteenth aspect, wherein the control unit is arranged to automatically save the scrolling speed setting.

A twentieth aspect of the present invention is directed towards a device including the features of the eighteenth aspect, wherein the control unit is arranged to save the scrolling speed setting after detecting a selection of saving scrolling speed from the user.

A twenty-first aspect of the present invention is directed towards a device including the features of the eighteenth aspect, wherein the control unit is arranged to save the scrolling speed setting for said set of items.

A twenty-second aspect of the present invention is directed towards a device including the features of the eighteenth aspect, wherein the control unit is arranged to save the scrolling speed setting for at least one other set of items.

A twenty-third of the present invention is directed towards a device including the features of the twelfth aspect, wherein the first user input unit is provided as at least one navigation key for navigating in a menu system of the device and the second user input unit is provided as at least one button on the side of the device normally used for volume settings or vice versa.

A twenty-fourth aspect of the present invention is directed towards a device including the features of the twelfth aspect, wherein the first user input unit is provided as at least one button on the side of the device normally used for volume settings and the second user input unit is provided as at least one navigation key for navigating in a menu system of the device.

A twenty-fifth aspect of the present invention is directed towards a device including the features of the twelfth aspect, wherein the device is a portable electronic device.

A twenty-sixth aspect of the present invention is directed towards a device including the features of the twenty-fifth aspect, wherein the device is a portable communication device.

A twenty-seventh aspect of the present invention is directed towards a device including the features of the twenty-sixth aspect, wherein the device is a cellular phone.

The invention has the following advantages. A user can directly and in a simple manner control the scrolling speed when he is in the process of scrolling. The invention is also very inexpensive to implement, because it can be implemented using the user input units already provided in the device and the speed variation function can be provided with just some extra software in addition to the scrolling software already existing.

The embodiment according to aspects six and seventeen has the further advantage that the increasing of the scrolling speed when the actuations corresponding to the same directions coincide, and otherwise decreasing the scrolling speed also gives a user a natural and intuitive feeling that selection of change of scrolling speed matches with the scrolling direction.

The embodiment according to aspects ten and twenty-one has the further advantage that by storing the scrolling speed for a particular set of items, different scrolling speeds tailored after the different sets can be provided for a user.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a front view of a portable electronic device in the form of a cellular phone,
fig. 2 shows a block schematic of the relevant parts of the invention inside the phone in fig. 1, and
fig. 3 shows a flow chart of a method according to the invention.

### DETAILED DESCRIPTION OF EMBODIMENTS

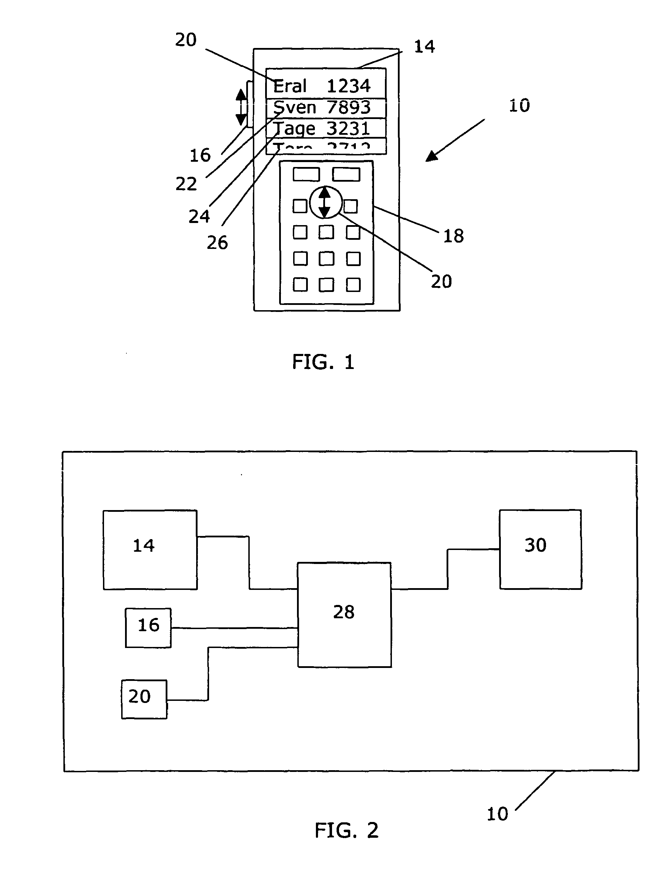

A device according to the invention, which here is a portable electronic device 10 is shown in a front view in fig. 1. In the preferred embodiment the device is a cellular phone 10 having an information presentation unit in the form of a display 14, a first user input unit 20 in the form of a navigation key in a keypad 18. The device also has an antenna. This is however not shown because it is provided in the interior of the phone. The device also includes a second user input unit 16 in the form of a key or button 16 provided on the side of the phone. The button 16 is a so called volume button, which can be used for adjusting the volume setting of the phone, but in the present invention it has one further function, which will be described in more detail below. The volume button 16 can be actuated in an upwards direction and in an opposite downwards direction, which is indicated by an arrow pointing in both these directions in the figure. Apart from making and receiving telephone calls, the keypad 18 is used for entering information such as selection of functions and applications and responding to prompts and the display 14 is used for displaying functions and prompts to a user of the phone. In order to do this, the keypad 18 includes the navigation key 20, which can be used for navigating up and down through a menu system provided in the phone. This is also indicated by the navigation key 20 being provided with an arrow pointing both upwards and downwards. In the menu system sets of items are provided in the form of lists. In fig. 1 one such list of items is shown. The list is here a list of contacts provided in a phone book of the phone, where the display 14 shows the name of the contact together with a phone number of the contact. In fig. 1 the list is shown as having a first item 20, showing the name of Eral and his phone number 1234, a second item 22, showing the name of Sven and his phone number 7893, a third item 24, showing the name of Tage and his phone number 3231. Part of a fourth item 26, which cannot be fully seen, is also shown for illustrative purposes. This list can be very long and in order for a user to find a contact, which he might want to call, he might have to scroll a long time through this list. A list can typically include as much as 200 contacts. The antenna 12 is further used for communication with other users via a network.

Fig. 2 shows a block schematic of the different parts of the phone 10 relevant to the present invention. The display 14, the first user input unit 20 and the second user input unit 20 are here shown as separate boxes connected to a control unit 28. The control unit 28 is furthermore connected to a scroll speed storage 30.

The control unit is normally provided in the form of one or more processors with corresponding program memories containing suitable software code. The storage is also preferably provided in the form of a memory.

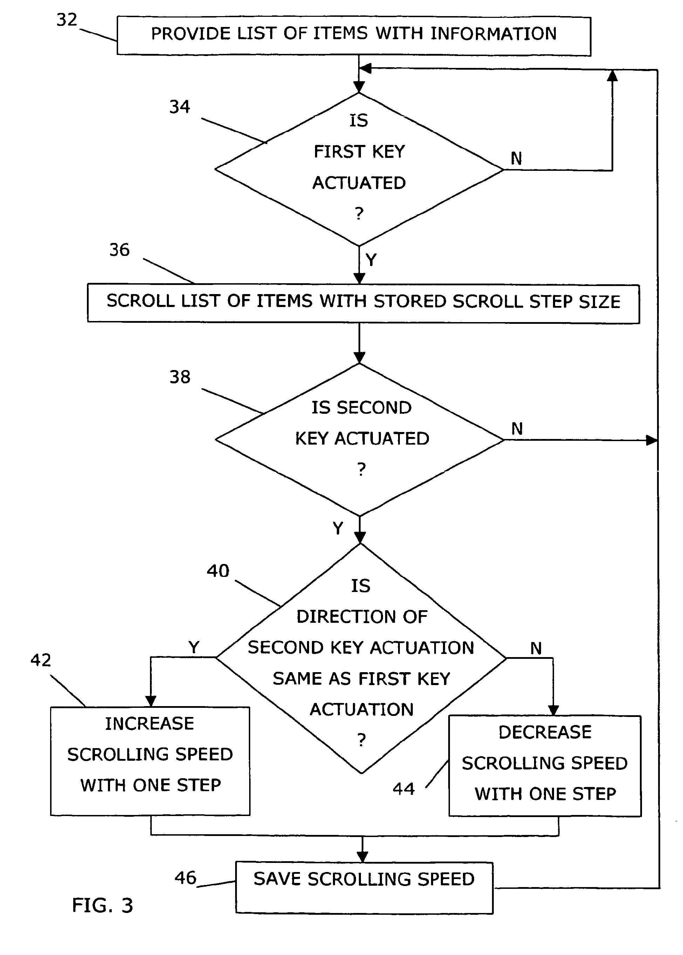

Fig. 3 shows a flow chart of the method according to the invention.

A preferred embodiment of the present invention will now be explained with reference to fig. 1, 2 and 3. This embodiment is also believed to be the best mode of the invention at the moment. Upon the selection of a list of items in the menu system of the phone, the control unit 28 retrieves the list of items 20, 22, 24, 26 and presents it on the display 14, step 32. The control unit 28 thereafter awaits a scrolling action selection through inputs from the user via the navigation key 20. If the key is not actuated or depressed, step 34, the control unit continues to wait. If however the navigation key is actuated, step 34, the control unit 28 goes on and scrolls the list with a stored step size, step 36. This scrolling is performed as long as the navigation key is actuated or depressed. The step size used is retrieved from scroll speed storage 30 prior to the scrolling. As long as the navigation key is depressed the control unit 28 continues to scroll the list of items. At the same time it also awaits a scrolling speed variation selection through actuation of the volume button 16 by the user. If the volume button is not actuated, step 38, the control unit goes back and monitors the navigation key, step 34. If however the second key is actuated, step 38, the control unit 28 changes the scrolling speed.

The navigation key 20 enables the possibility to navigate in an upward direction and in a downward direction as is indicated by the arrow pointing in two directions in fig. 1. This means that if a lower part of the key is depressed, scrolling is made downwards, while if an upper part is depressed scrolling is performed in a direction upwards. The volume button also has the possibility to provide two different inputs in the same way, where the actuation in a direction upwards provides a higher volume and the actuation in a direction downwards provides a decrease of the volume. This button will according to the invention be used in a different way. When the control unit 28 thus has determined that both keys are actuated simultaneously, steps 34 and 38, it goes on and checks the direction of the scrolling selection of the first and second user input units, step 40. If both have been selected to go in the same direction, step 40, i.e. either upwards or downwards, the scrolling speed is increased with one step, step 42. However, if they have been selected to go in different directions, step 40, i.e. one in the upwards direction and the other in the downwards direction, the scrolling speed is decreased one step, step 44. This means that an actuation of the volume button in the upwards direction will only lead to an increase of the scrolling speed if the list is scrolled in the same direction. This gives a user a natural and intuitive feeling for what a scrolling speed increase or decrease would correspond to. The alternative, that one direction would always provide an increased speed would in many cases make a user feel uncomfortable when scrolling is actually performed in the opposite direction. When the scrolling speed has been increased or decreased, steps 42, 44, the new scrolling speed is automatically stored in the scroll speed storage 30 by the control unit 28, step 46, which scrolling speed is thereafter used for scrolling in this list. Thereafter the control unit 28 goes back and monitors the navigation key, step 34. This method is then continued as long as the user is present in the menu having this list and as long as he has not selected an item in the list.

The present invention has many advantages. It allows a user to get full control of the scrolling, which he would not otherwise have. One alternative less satisfactory way to provide different types of scrolling is for example to provide a scrolling setting possibility in a special settings menu. It is often not good to provide this type of solution though, because the user might feel that it is complicated to navigate to this special menu in order to set a scrolling speed. The settings would then also have to be made for every possible list of items provided, which is burdensome for a user if there are many such lists. It is preferred that the scrolling speed can be influenced directly when it is needed, i.e. when scrolling is performed. Another possible solution that has been discussed is the provision of automatic increase of the speed when the list is long. In this case the user feels he has no real control of the scrolling process. According to the present invention a user can directly and in a simple manner control the scrolling speed when he is in the process of scrolling. For a suitable selection of step size in the device, the scrolling speed can be incremented and decremented such that it suits the particular user at the particular time. By storing the scrolling speed for the particular list, different scrolling speeds tailored after the different lists can be provided for a user. The provision of increasing of the scrolling speed when the actuations corresponding to the same directions coincide, and otherwise decreasing the scrolling speed also gives a user a natural and intuitive feeling that selection of change of scrolling speed matches the scrolling direction. The invention is also very inexpensive to implement. By providing the scroll speed control with the volume button, there is furthermore no need for any additional buttons or keys on the phone and the speed variation function can be provided with just some extra software in addition to the scrolling software already existing.

The present invention can be varied in many ways. The scrolling speed was described as being varied stepwise. It should be realised that it can just as well be changed linearly. The saving of the scrolling speed might as an alternative be made after approval of the user, which approval could be made through depressing any of the keys in the keypad. The saved scrolling speed might furthermore be made to apply to more than one list, like for instance all lists. The keys described were keys, where one key can be used for indicating two directions. It is of course also possible to provide this functionality with two separate keys. The same is true for the volume button. This can also be provided as two separate buttons that either increase or decrease the volume. The navigation key was furthermore described in relation to providing navigation in only upwards and downwards directions. Naturally it is also possible to provide navigation sideways. It should also be understood that the scrolling control according to the invention could also be performed for navigation sideways. The use of the buttons described can furthermore be the opposite, in that the volume button can be used for scrolling and the navigation button be used for scrolling speed control. The invention is of course not limited to these types of buttons or keys at all, but can be used with any keys provided on a device. The set of items was described in relation to a list of contacts and their phone numbers. The invention is not limited to this, but can be provided for any set of items, such as a list of received or sent messages, a list of functions or a list of settings that can be made. It is also applicable to scrolling in for instance a text file. The invention was described in relation to a cellular phone. A cellular phone is just one example of a device in which the invention can be implemented. The invention can for instance also be used in a PDA (personal digital assistant), a palm top computer a lap top computer and a regular PC. Therefore the present invention is only to be limited by the following claims.

## Claims

1. Method of varying the scrolling speed provided for a set of items within a portable electronic device (10), wherein a first user input unit (20) allows actuations in a first direction and in a second opposite direction, and comprising the steps of:
providing a set of items of information (20, 22, 24, 26) that can be scrolled by a user, (step 32),
detecting a scrolling action selection from a user by an actuation of the first input unit, (step 34),
**characterized in that the** portable electronic device (10) further comprises a second user Input unit (16) that allows actuation in the first and the second opposite directions, the method comprising the further step of:
detecting a scrolling speed variation selection from the user by an actuation of the second user input unit, (step 38), and
changing the scrolling speed in dependence of selections made by the user, wherein the step of changing comprises the further steps of
increasing the scrolling speed if a scrolling action selection and a scrolling speed variation selection have been made for the same direction, (step 42), and
decreasing the scrolling speed if a scrolling action selection and a scrolling speed variation selection have been made for the opposite directions, (step 44).

2. Method according to claim 1, wherein the step of changing is made based on simultaneous detection of scrolling action and scrolling speed variation.

3. Method according to claim 1 or 2, wherein the scrolling speed is varied with a certain step size and the scrolling speed is varied with said step size each time a scrolling speed variation selection is detected during detection of a scrolling action selection.

4. Method according to claim 1 or 2, wherein the scrolling speed is varied linearly when a scrolling speed variation selection is detected during detection of a scrolling action selection.

5. Method according to any previous claim, further comprising the step of saving a scrolling speed setting based on the changed scrolling speed, (step 46).

6. Method according to claim 5, wherein the step of saving is performed automatically.

7. Method according to claim 5, wherein the step of saving is performed after detecting a selection of saving scrolling speed from the user.

8. Method according to any of claims 5-7, wherein the step of saving is performed for said set of items.

9. Method according to claim 8, wherein the step of saving is also performed for at least one other set of items.

10. Portable electronic device (10) for varying the scrolling speed provided for a set of items comprising:
an information presentation unit (14) providing a set of items of information (20, 22, 24, 26) that can be scrolled by a user,
a first user input unit (20), for allowing a scrolling action selection by the user and allowing actuation in a first direction and in a second opposite direction, and
a control unit (28) arranged to:
provide said set of items of information on the information presentation unit,
detect a scrolling action selection by a user via said first user input unit,
**characterized In that** the portable electronic device (10) further comprises
a second user input unit (16) for allowing a scrolling speed variation selection by the user and allowing actuation in the first and the second opposite directions, and that the control unit (28) further is arranged to:
detect a scrolling speed variation selection via said second user input unit, and
change the scrolling speed in dependence of the selections made by the user,
and that the control unit (28) provides
a scrolling speed increase if a scrolling action selection by an actuation of the first input unit for one direction together with a scrolling speed variation selection by an actuation of the second user input unit for the same direction is detected, and
a scrolling speed decrease if a scrolling action selection by an actuation of the first input unit for one direction together with of a scrolling speed variation selection by an actuation of the second user input unit for the opposite direction is detected.

11. Portable electronic device (10) according to claim 10, wherein the control unit is arranged to change the scrolling speed based on simultaneous detection of scrolling action and scrolling speed variation.

12. Portable electronic device (10) according to claim 10 or 11, wherein the control unit (28) is further arranged to vary the scrolling speed with a certain step size and the scrolling speed is varied with said step size each time a scrolling speed variation selection is detected during a detection of a scrolling action selection.

13. Portable electronic device (10) according to claim 10 or 11. wherein the control unit (28) is further arranged to vary the scrolling speed linearly when a scrolling speed variation selection is detected during a detection of a scrolling action selection.

14. Portable electronic device (10) according to any of claims 10 - 13, further comprising a scroll speed storage (30) and wherein the control unit is further arranged to save a scrolling speed setting in the scroll speed storage based on the changed scrolling speed.

15. Portable electronic device (10) according to claim 14, wherein the control unit is arranged to automatically save the scrolling speed setting.

16. Portable electronic device (10) according to claim 14, wherein the control unit is arranged to save the scrolling speed setting after detecting a selection of saving scrolling speed from the user.

17. Portable electronic device (10) according to any of claims 14 - 16, wherein the control unit is arranged to save the scrolling speed setting for said set of Items.

18. Portable electronic device (10) according to claim 17, wherein the control unit is arranged to save the scrolling speed setting for at least one other set of Items.

19. Portable electronic device (10) according to any of claims 10 - 18, wherein the first user input unit is provided as at least one navigation key (20) for navigating in a menu system of the device and the second user input unit is provided as at least one button (16) on the side of the device normally used for volume settings or vice versa.

20. Portable electronic device (10) according to any of claims 10 - 18, wherein the first user input unit is provided as at least one button on the side of the device normally used for volume settings and the second user input unit is provided as at least one navigation key for navigating in a menu system of the device.

21. Portable electronic device (10) according to any of claims 10 - 20, wherein the device is a portable electronic device.

22. Portable electronic device according to claim 21, wherein the device is a portable communication device.

23. Portable electronic device according to claim 22, wherein the device is a cellular phone.

## Patentansprüche

1. Verfahren zum Variieren der für einen Satz von Einzelheiten in einer tragbaren elektronischen Vorrichtung (10) bereitgestellten Scrollgeschwindigkeit, wobei eine erste Benutzereingabeeinheit (20) eine Betätigung in einer ersten Richtung und in einer entgegengesetzten zweiten Richtung ermöglicht, aufweisend die Schritte:
Bereitstellen eines Satzes (20, 22, 24, 26) von Einzelheiten einer Information, der vom Benutzer gescrollt werden kann (Schritt 32),
Detektieren einer Scrollaktionsauswahl seitens eines Benutzers durch Betätigen der ersten Eingabeeinheit (Schritt 34),
**dadurch gekennzeichnet, dass** die tragbare elektronische Vorrichtung (10) außerdem eine zweite Benutzereingabeeinheit (16) aufweist, die eine Betätigung in der ersten und entgegengesetzten zweiten Richtung ermöglicht, wobei das Verfahren außerdem den Schritt aufweist:
Detektieren einer Scrollgeschwindigkeitsvariationsauswahl seitens des Benutzers durch Betätigen der zweiten Benutzereingabeeinheit (Schritt 38) und
Ändern der Scrollgeschwindigkeit in Abhängigkeit von seitens des Benutzers getroffenen Auswahlen,
wobei der Schritt des Änderns die weiteren Schritte eines Erhöhens der Scrollgeschwindigkeit, wenn für die gleiche Richtung eine Scrollaktionsauswahl und eine Scrollgeschwindigkeitsvariationsauswahl getroffen worden sind (Schritt 42) und eines Erniedrigens der Scrollgeschwindigkeit, wenn für die entgegengesetzten Richtungen eine Scrollaktionsauswahl und eine Scrollgeschwindigkeitsvariationsauswahl getroffen worden sind (Schritt 44), aufweist.

2. Verfahren nach Anspruch 1, wobei der Schritt des Änderns auf Basis einer gleichzeitigen Detektion von Scrollaktion und Scrollgeschwindigkeitsvariation gemacht wird.

3. Verfahren nach Anspruch 1 oder 2, wobei die Scrollgeschwindigkeit mit einer gewissen Schrittgröße variiert wird und die Scrollgeschwindigkeit jedes Mal, wenn während der Detektion einer Scrollaktionsauswahl eine Scrollgeschwindigkeitsvariationsauswahl detektiert wird, mit der Schrittgröße variiert wird.

4. Verfahren nach Anspruch 1 oder 2, wobei die Scrollgeschwindigkeit linear variiert wird, wenn während einer Detektion einer Scrollaktionsauswahl eine Scrollgeschwindigkeitsvariationsauswahl detektiert wird.

5. Verfahren nach einem der vorhergehenden Ansprüche, außerdem aufweisend den Schritt eines Sicherns einer Scrollgeschwindigkeitseinstellung auf Basis der geänderten Scrollgeschwindigkeit (Schritt 46).

6. Verfahren nach Anspruch 5, wobei der Schritt des Sicherns automatisch ausgeführt wird.

7. Verfahren nach Anspruch 5, wobei der Schritt des Sicherns nach einem Detektieren einer Auswahl eines Sicherns der Scrollgeschwindigkeit seitens des Benutzers ausgeführt wird.

8. Verfahren nach einem der Ansprüche 5 bis 7, wobei der Schritt des Sicherns für den Satz von Einzelheiten ausgeführt wird.

9. Verfahren nach Anspruch 8, wobei der Schritt des Sicherns auch für wenigstens einen anderen Satz von Einzelheiten ausgeführt wird.

10. Tragbare elektronische Vorrichtung (10) zum Variieren der für einen Satz von Einzelheiten bereitgestellten Scrollgeschwindigkeit, aufweisend:
eine Informationspräsentationseinheit (14), die einen Satz (20, 22, 24, 26) von Einzelheiten einer Information bereitstellt, der von einem Benutzer gescrollt werden kann,
eine erste Benutzereingabeeinheit (20) zum Ermöglichen einer Scrollaktionauswahl durch den Benutzer und Ermöglichen einer Betätigung in einer ersten Richtung und einer entgegengesetzten zweiten Richtung, und
eine Steuerungseinheit (28) die so ausgebildet ist, dass sie den Satz von Einzelheiten der Information auf der Informationspräsentationseinheit bereitstellt, eine Scrollaktionsauswahl durch einen Benutzer über die erste Benutzereingabeeinheit detektiert,
**dadurch gekennzeichnet, dass** die tragbare elektronische Vorrichtung (10) außerdem eine zweite Benutzereingabeeinheit (16) zum Ermöglichen einer Scrollgeschwindigkeitsvariationsauswahl durch den Benutzer und Ermöglichen einer Betätigung in der ersten und entgegengesetzten zweiten Richtung aufweist, und dass die Steuerungseinheit (28) außerdem ausgebildet ist zum
Detektieren einer Scrollgeschwindigkeitsvariationsauswahl über die zweite Benutzereingabeeinheit und
Ändern der Scrollgeschwindigkeit in Abhängigkeit von den vom Benutzer getroffenen Auswahlen,
und dass die Steuerungseinheit (28),
eine Scrollgeschwindigkeitserhöhung bereitstellt,
wenn eine Scrollaktionsauswahl durch eine Betätigung der ersten Eingabeeinheit für eine Richtung zusammen mit einer Skrollgeschwindigkeitsvariationsauswahl durch eine Betätigung der zweiten Benutzereingabeeinheit für die gleiche Richtung detektiert wird, und eine Scrollgeschwindigkeitserniedrigung bereitstellt, wenn eine Scrollaktionsauswahl durch eine Betätigung der ersten Eingabeeinheit für eine Richtung zusammen mit einer Scrollgeschwindigkeitsvariationsauswahl durch eine Betätigung der zweiten Benutzereingabeeinheit für die entgegengesetzte Richtung detektiert wird.

11. Tragbare elektronische Vorrichtung (10) nach Anspruch 10, wobei die Steuerungseinheit ausgebildet ist zum Ändern der Scrollgeschwindigkeit auf Basis einer gleichzeitigen Detektion einer Scrollaktion und einer Scrollgeschwindigkeitsvariation.

12. Tragbare elektronische Vorrichtung (10) nach Anspruch 10 oder 11, wobei die Steuerungseinheit (28) außerdem ausgebildet ist zum Variieren der Scrollgeschwindigkeit mit einer gewissen Schrittgröße und die Scrollgeschwindigkeit jedes Mal, wenn während einer Detektion einer Scrollaktionsauswahl eine Scrollgeschwindigkeitsvariationsauswahl detektiert wird, mit der Schrittgröße variiert wird.

13. Tragbare elektronische Vorrichtung (10) nach Anspruch 10 oder 11, wobei die Steuerungseinheit (28) außerdem ausgebildet ist zum linearen Variieren der Scrollgeschwindigkeit, wenn während einer Detektion einer Scrollaktionsauswahl eine Scrollgeschwindigkeitsvariationsauswahl detektiert wird.

14. Tragbare elektronische Vorrichtung (10) nach einem der Ansprüche 10 bis 13, außerdem mit einem Scrollgeschwindigkeitsspeicher (30), und wobei die Steuerungseinheit außerdem ausgebildet ist zum Sichern einer Scrollgeschwindigkeitseinstellung im Scrollgeschwindigkeitsspeicher auf Basis der geänderten Scrollgeschwindigkeit.

15. Tragbare elektronische Vorrichtung (10) nach Anspruch 14, wobei die Steuerungseinheit ausgebildet ist zum automatischen Sichern der Scrollgeschwindigkeitseinstellung.

16. Tragbare elektronische Vorrichtung (10) nach Anspruch 14, wobei die Steuerungseinheit ausgebildet ist zum Sichern der Scrollgeschwindigkeitseinstellung nach einem Detektieren einer Auswahl eines Sicherns der Scrollgeschwindigkeit seitens des Benutzers.

17. Tragbare elektronische Vorrichtung (10) nach einem der Ansprüche 14 bis 16, wobei die Steuerungseinheit ausgebildet ist zum Sichern der Scrollgeschwindigkeitseinstellung für den Satz von Einzelheiten.

18. Tragbare elektronische Vorrichtung (10) nach Anspruch 17, wobei die Steuerungseinheit ausgebildet ist zum Sichern der Scrollgeschwindigkeitseinstellung für wenigstens einen anderen Satz von Einzelheiten.

19. Tragbare elektronische Vorrichtung (10) nach einem der Ansprüche 10 bis 18, wobei die erste Benutzereingabeeinheit als wenigstens eine Navigationstaste (20) zum Navigieren in einem Menüsystem der Vorrichtung bereitgestellt ist und die zweite Benutzereingabeeinheit als wenigstens ein normalerweise zu Lautstärkepegeleinstellungen benutzter Knopf (16) auf der Seite der Vorrichtung bereitgestellt ist oder umgekehrt.

20. Tragbare elektronische Vorrichtung (10) nach einem der Ansprüche 10 bis 18, wobei die erste Benutzereingabeeinheit als wenigstens ein normalerweise zu Lautstärkepegeleinstellungen benutzter Knopf auf der Seite der Vorrichtung bereitgestellt ist und die zweite Benutzereingabeeinheit als wenigstens eine Navigationstaste zum Navigieren in einem Menüsystem der Vorrichtung bereitgestellt ist.

21. Tragbare elektronische Vorrichtung (10) nach einem der Ansprüche 10 bis 20, wobei die Vorrichtung eine tragbare elektronische Vorrichtung ist.

22. Tragbare elektronische Vorrichtung (10) nach Anspruch 21, wobei die Vorrichtung eine tragbare Kommunikationsvorrichtung ist.

23. Tragbare elektronische Vorrichtung nach Anspruch 22,
wobei die Vorrichtung ein Zellulartelefon ist.

## Revendications

1. Procédé destiné à faire varier la vitesse de défilement offerte pour un ensemble d'éléments dans un dispositif électronique portable (10), une première unité d'entrée de l'utilisateur (20) permettant l'actionnement dans une première direction et dans une seconde direction, opposée, le procédé comprenant les étapes consistant à :
fournir un ensemble d'éléments d'information (20, 22, 24, 26) qu'un utilisateur peut faire défiler (étape 32),
détecter une sélection d'action de défilement opérée par un utilisateur qui actionne la première unité d'entrée (étape 34),
**caractérisé en ce que** le dispositif électronique portable (10) comprend en outre une seconde unité d'entrée de l'utilisateur (16) permettant l'actionnement dans la première et dans la seconde direction, opposée, le procédé comprenant en outre les étapes consistant à :
détecter une sélection de changement de vitesse de défilement par l'utilisateur qui actionne la seconde unité d'entrée de l'utilisateur (étape 38), et
modifier la vitesse de défilement en fonction des sélections opérées par l'utilisateur,
l'étape de modification comprenant en outre les étapes consistant à :
augmenter la vitesse de défilement si la sélection de l'action de défilement et la sélection de changement de la vitesse de défilement ont été faites dans la même direction (étape 42), et
diminuer la vitesse de défilement si la sélection de l'action de défilement et la sélection de changement de la vitesse de défilement ont été faites dans des directions opposées (étape 44).

2. Procédé selon la revendication 1, dans lequel l'étape de modification est opérée sur la base d'une détection simultanée de l'action de défilement et du changement de vitesse de défilement.

3. Procédé selon la revendication 1 ou 2, dans lequel la vitesse de défilement varie par échelons d'une certaine valeur et la vitesse de défilement est modifiée de ladite valeur d'échelon à chaque fois qu'une sélection de changement de vitesse de défilement est détectée pendant qu'est détectée une sélection d'action de défilement.

4. Procédé selon la revendication 1 ou 2, dans lequel la vitesse de défilement est modifiée linéairement lorsqu'une sélection de changement de vitesse de défilement est détectée pendant qu'est détectée une sélection d'action de défilement.

5. Procédé selon l'une quelconque des revendications précédentes, comprenant en outre l'étape consistant à sauvegarder un réglage de vitesse de défilement sur la base de la vitesse de défilement modifiée (étape 46).

6. Procédé selon la revendication 5, dans lequel l'étape de sauvegarde est opérée automatiquement.

7. Procédé selon la revendication 5, dans lequel l'étape de sauvegarde est opérée après détection d'une sélection de sauvegarde de la vitesse de défilement par l'utilisateur.

8. Procédé selon l'une quelconque des revendications 5 à 7, dans lequel l'étape de sauvegarde est opérée pour ledit ensemble d'éléments.

9. Procédé selon la revendication 8, dans lequel l'étape de sauvegarde est opérée également pour au moins un autre ensemble d'éléments.

10. Dispositif électronique portable (10) destiné à faire varier la vitesse de défilement offerte pour un ensemble d'éléments, comprenant:
une unité de présentation d'informations (14), destinée à fournir un ensemble d'éléments d'information (20, 22, 24, 26) qu'un utilisateur peut faire défiler,
une première unité d'entrée de l'utilisateur (20), destinée à permettre une sélection d'action de défilement par l'utilisateur et à permettre un actionnement dans une première direction et dans une seconde direction, opposée, et
une unité de commande (28) conçue pour:
fournir ledit ensemble d'éléments d'information sur ladite unité de présentation d'informations,
détecter une sélection d'action de défilement opérée par un utilisateur à l'aide de ladite première unité d'entrée,
**caractérisé en ce que** le dispositif électronique portable (10) comprend en outre une seconde unité d'entrée de l'utilisateur (16) permettant une sélection du changement de vitesse de défilement par l'utilisateur et l'actionnement dans la première et dans la seconde direction, opposée,
**en ce que** l'unité de commande (28) est en outre conçue pour :
détecter une sélection de changement de vitesse de défilement via la seconde unité d'entrée de l'utilisateur, et
modifier la vitesse de défilement en fonction des sélections opérées par l'utilisateur,
et **en ce que** l'unité de commande (28) offre
une augmentation de la vitesse de défilement si l'on détecte une sélection de l'action de défilement sous la forme d'un actionnement de la première unité d'entrée dans une direction en même temps qu'une sélection de changement de la vitesse de défilement sous la forme d'un actionnement de la seconde unité d'entrée de l'utilisateur dans la même direction, et
une diminution de la vitesse de défilement si l'on détecte une sélection de l'action de défilement sous la forme d'un actionnement de la première unité d'entrée dans une direction en même temps qu'une sélection de changement de la vitesse de défilement sous la forme d'un actionnement de la seconde unité d'entrée de l'utilisateur dans la direction opposée.

11. Dispositif électronique portable (10) selon la revendication 10, dans lequel l'unité de commande est conçue pour modifier la vitesse de défilement sur la base d'une détection simultanée de l'action de défilement et du changement de vitesse de défilement.

12. Dispositif électronique portable (10) selon la revendication 10 ou 11, dans lequel l'unité de commande (28) est conçue en outre pour modifier la vitesse de défilement par échelons d'une certaine valeur et la vitesse de défilement est modifiée de ladite valeur d'échelon à chaque fois qu'une sélection de changement de vitesse de défilement est détectée pendant qu'est détectée une sélection d'action de défilement.

13. Dispositif électronique portable (10) selon la revendication 10 ou 11, dans lequel l'unité de commande (28) est conçue en outre pour modifier la vitesse de défilement linéairement lorsqu'une sélection de changement de vitesse de défilement est détectée pendant qu'est détectée une sélection d'action de défilement.

14. Dispositif électronique portable (10) selon l'une quelconque des revendications 10 à 13, comprenant en outre une mémoire de la vitesse de défilement (30) et dans lequel l'unité de commande est conçue en outre pour sauvegarder un réglage de vitesse de défilement dans la mémoire de vitesse de défilement sur la base de la vitesse de défilement modifiée.

15. Dispositif électronique portable (10) selon la revendication 14, dans lequel l'unité de commande est conçue pour sauvegarder automatiquement le réglage de la vitesse de défilement.

16. Dispositif électronique portable (10) selon la revendication 14, dans lequel l'unité de commande est conçue pour sauvegarder le réglage de la vitesse de défilement après détection d'une sélection de sauvegarde de la vitesse de défilement par l'utilisateur.

17. Dispositif électronique portable (10) selon l'une quelconque des revendications 14 à 16, dans lequel l'unité de commande est conçue pour sauvegarder la vitesse de défilement pour ledit ensemble d'éléments.

18. Dispositif électronique portable (10) selon la revendication 17, dans lequel l'unité de commande est conçue pour sauvegarder le réglage de la vitesse de défilement pour au moins un autre ensemble d'éléments.

19. Dispositif électronique portable (10) selon l'une quelconque des revendications 10 à 18, dans lequel la première unité d'entrée de l'utilisateur est fournie sous la forme d'au moins une touche de navigation (20) destinée à naviguer dans un système de menus du dispositif et la seconde unité d'entrée de l'utilisateur est fournie sous la forme d'au moins un bouton (16) sur le côté du dispositif normalement utilisé pour les réglages de volume, ou vice-versa.

20. Dispositif électronique portable (10) selon l'une quelconque des revendications 10 à 18, dans lequel la première unité d'entrée de l'utilisateur est fournie sous la forme d'au moins un bouton sur le côté du dispositif normalement utilisé pour les réglages de volume et la seconde unité d'entrée de l'utilisateur est fournie sous la forme d'au moins une touche de navigation destinée à naviguer dans un système de menus du dispositif.

21. Dispositif électronique portable (10) selon l'une quelconque des revendications 10 à 20, dans lequel le dispositif est un dispositif électronique portable.

22. Dispositif électronique portable selon la revendication 21, dans lequel le dispositif est un dispositif de communication portable.

23. Dispositif électronique portable selon la revendication 22, dans lequel le dispositif est un téléphone cellulaire.
